Europäisches Patentamt

European Patent Office

Office européen des brevets

(11) Numéro de publication: **0 006 121**

**B1**

(12) **FASCICULE DE BREVET EUROPEEN**

(45) Date de publication du fascicule du brevet: **21.11.84**

(21) Numéro de dépôt: **79101385.7**

(22) Date de dépôt: **07.05.79**

(51) Int. Cl.³: **H 04 L 25/03,** H 04 L 27/00

(54) *Procédé et dispositif pour initialiser un égaliseur adaptatif à partir d'un signal de données inconnu dans un système de transmission utilisant la modulation d'amplitude en quadrature.*

(30) Priorité: **13.06.78 FR 7818478**

(43) Date de publication de la demande:
**09.01.80 Bulletin 80/01**

(45) Mention de la délivrance du brevet:
**21.11.84 Bulletin 84/47**

(84) Etats contractants désignés:
**DE FR GB**

(56) Documents cités:
**FR-A-2 335 109**
**US-A-3 978 407**

(73) Titulaire: **International Business Machines Corporation**
**Old Orchard Road**
**Armonk, N.Y. 10504 (US)**

(72) Inventeur: **Godard, Dominique**
**Villa "Ormeau de Barnarac"**
**F-06650 Le Rouret (FR)**
Inventeur: **Thirion, Philippe**
**Chemin de Saint Paul**
**F-06570 Saint Paul De Vence (FR)**

(74) Mandataire: **de Pena, Alain**
**Compagnie IBM France Département de Propriété Industrielle**
**F-06610 La Gaude (FR)**

Courier Press, Leamington Spa, England.

## Description

### Domaine technique

La présente invention concerne les éqaliseurs automatiques adaptatifs utilisés dans les systèmes de transmission de données utilisant la modulation d'amplitude en quadrature (QAM). Le terme modulation QAM est utilisé ici au sens large de façon á inclure tous les systèmes dans lesquels le signal transmis peut être représenté par la superposition de deux porteuses en quadrature modulées en amplitude. Le terme modulation QAM inclut ainsi notamment la modulation par sauts de phase et d'amplitude combinés et la modulation QAM au sens étroit dans laquelle les deux porteuses en quadrature sont modulées de façon indépendante. La présente invention concerne puls particulièrement un procédé et un dispositif pour initialiser un égaliseur adaptatif à partir d'un signal de données inconnu reçu par le récepteur, et est particulièrement utile dans les systèmes de transmission de données arrangés en réseau multipoint.

### Etat de la technique antérieure

Dans les systèmes de transmission de données utilisant la modulation QAM, la séquence de bits à transmettre est tout d'abord divisée en groupes de $Q$ bits et on fait correspondre à chacun de ces groupes un de $2^Q$ nombres complexes, ou symboles complexes. On a l'habitude d'illustrer l'ensemble de ces $2^Q$ symboles sur un plan complexe en y portant les points ayant ces symbolès pour coordonnées. L'ensemble de ces points est désigné généralement par le terme constellation du signal. Ces symboles sont ensuite transmis un par un à des instants régulièrement espacés de $T$ secondes, appelés instants de signalisation. Chaque symbole est transmis en faisant correspondre respectivement à ses parties réelle et imaginaire une valeur d'amplitude de deux porteuses en quadrature. Ces deux porteuses sont ensuite combinées et appliquées à l'entrée du canal de transmission.

Le rôle du canal de transmission est de délivrer à sa sortie connectée à un récepteur de données un signal relativement semblable à celui qui a été appliqué à son entrée. Pour des raisons essentiellement économiques on utilise le puls souvent des lignes téléphoniques comme canal de transmission. Or, si les lignes téléphoniques sont bien adaptées pour transmettre correctement la parole, elles ne le sont pas pour transmettre des données numériques à des vitesses supérieures ou égales à 4800 bits par seconde avec une très faible probabilité d'erreur. En effet, ces lignes introduisent des perturbations qui affectent la qualité des signaux pendant leur transmission, et qui rendent difficile une détection correcte des données transmises. Ces perturbations comprennent principalement des distorsions d'amplitude et de phase qui provoquent une interaction entre les signaux successivement transmis, connue sous le nom d'interférence intersymbole. Dans les récepteurs des systèmes de transmission de données à grande vitesse on utilise généralement un égaliseur automatique adaptatif pour minimiser les effets de l'interférence intersymbole avant de détecter les données.

Le type d'égaliseur adaptatif le plus utilisé dans les systèmes de transmission de données utilisant la modulation QAM est l'égaliseur transversal complexe dont on trouvera un exemple de réalisation dans le document FR—A—2 237 379. Dans l'égaliseur décrit dans ce brevet, chacune des composantes en phase et en quadrature du signal reçu est appliquée à l'entrée d'une paire de filtres transversaux et les sorties de ces filtres sont combinées pour générer les composantes en phase et en quadrature du signal égalisé. Les coefficients de ces filtres, qui constituent les coefficients de l'égaliseur, sont ajustés automatiquement de façon à satisfaire un critère de performance donné. Avant de transmettre des données, il est nécessaire que les valeurs des coefficients de l'égaliseur soient aussi proches que possible de valeurs optimales. Pour cela, on prévoit avant la transmission des données une période d'initialisation au cours de laquelle une séquence d'initialisation connue est transmise et analysée par le récepteur qui en dérive un ajustement initial des coefficients de l'égaliseur à des valeurs aussi proches que possible des valeurs optimales. Ensuite les coefficients sont ajustés continuellement pendant la transmission des données.

Dans les systèmes de transmission de données arrangés en réseau multipoint, plusieurs équipements terminaux de données échangent des données à travers une ligne de transmission commune. Chaque équipement terminal est relié à la ligne de transmission commune à travers un modem qui comprend un émetteur et un récepteur de données. Tous les équipements terminaux n'ont pas le même degré d'intelligence et en général l'un d'eux, qui est souvent un calculateur, contrôle l'ensemble du réseau et la transmission de données se fait entre ce calculateur et les autres équipements terminaux de données. On a l'habitude de désigner par modem maître le modem associé au calculateur et par modems tributaires les autres modems. En général, une fois pas jour avant toute transmission de données une procédure d'initialisation du réseau prend place, au cours de laquelle l'émetteur du modem maître envoie des signaux de synchronisation sur la ligne de transmission commune pour conditionner convenablement les récepteurs des modems tributaires pour qu'ils soient prêts à recevoir ultérieurement les données transmises. Ces signaux de synchronisation comprennent notamment une séquence d'initialisation connue qui permet d'initialiser les égaliseurs des récepteurs tributaires.

Le brevet US—A—3 978 407 décrit une technique d'initialisation selon laquelle l'émetteur transmet tout d'abord une séquence d'initialisation prédéterminée en utilisant une première constellation à deux points, puis les données à semi-vitesse en utilisant une seconde constellation à quatre points, et ce pendant un intervalle de temps prédéterminé, et ensuite les données à vitesse normale en utilisant une troisième constellation à seize points. Le récepteur reconnaît la séquence d'initialisation et commence à ajuster l'égaliseur sur la séquence d'initialisation reçue en utilisant la première constellation, passe en demi-vitesse lorsqu'il détecte la fin de séquence d'initialisation et continue à ajuster l'égaliseur sur les données reçues à demi-vitesse en utilisant la seconde constellation. A la fin de l'intervalle de temps prédéterminé, le récepteur passe en vitesse normale et finalise l'ajustement de l'égaliseur en utilisant la troisième constellation. Les points des constellations utilisées pour l'égalisation correspondent à des points des constellations utilisées par la transmission.

Cependent, il peut se produire des cas où il est nécessaire d'initialiser l'égaliseur du récepteur d'un modem tributaire après que la procédure d'initialisation du réseau ait été terminée. C'est notamment le cas où un modem tributaire n'était pas sous tension lors de la procédure d'initialisation du réseau et n'a donc pas reçu la séquence d'initialisation, et le cas où un récepteur tributaire bien que conditionné lors de la procédure d'initialisation du réseau perd ensuite l'égalisation à la suite de dégradations des caractéristiques de la ligne de transmission. Dans ces cas là, plusieurs approches peuvent être envisagées pour initialiser l'égaliseur d'un récepteur tributaire.

Dans une première approche, l'émetteur du modem maître peut transmetre périodiquement une séquence d'initialisation pour permettre l'initialisation des égaliseurs de tous les modems tributaires. Dans une seconde approche, le modem tributaire qui a perdu l'égalisation peut alerter le modem maître et, en réponse, l'émetteur du modem maître transmettre une séquence d'initialisation qui permettra d'initialiser l'égaliseur du modem tributaire.

Dans ces deux approches, le récepteur du modem tributaire connaît la séquence d'initialisation transmise et peut dériver assez facilement un ajustement initial de l'égaliseur à partir de la séquence d'initialisation reçue. Cependent, dans des deux approches, qu'elles utilisent soit une séquence d'initialisation longue soit la technique décrite dans le brevet US—A—3 978 407, l'opération d'initialisation de l'égaliseur implique l'émetteur et l'ensemble du réseau s'en trouve perturbé car l'émetteur doit stopper la transmission des données pour commencer une opération d'initialisation.

Dans une troisième approche on peut prévoir, dans chaque modem tributaire des moyens pour emmagasiner plusieurs jeux de coefficients d'égaliseur qui seront essayés successivement lorsqu'une perte d'égalisation se produit. On ne peut bien sûr prévoir un grand nombre de jeux différents de coefficients et il arrive qu'on ne puisse récupérer d'égalisation lorsque la ligne de transmission introduit des distorsions importantes.

Exposé de l'invention

Un premier objet de l'invention est de fournir un procédé et un dispositif pour initialiser l'égaliseur d'un récepteur de données QAM, qui ne nécessitent pas la transmission d'une séquence d'initialisation connue par l'émetteur, et qui sont ainsi invisibles par l'émetteur.

Un autre objet de l'invention est de fournir un procédé et un dispositif pour initialiser l'égaliseur du récepteur QAM d'un modem tributaire dans un réseau de transmission, sans perturber le fonctionnement du réseau.

D'une manière générale, l'invention propose un procédé pour initialiser l'égaliseur adaptatif d'un récepteur de données dans un système de transmission de données utilisant une modulation QAM dans lequel l'émetteur associé à ce récepteur transmet une suite de symboles appartenant à un ensemble de $2^Q$ symboles qui peut être représente sur un plan complexe par une répartition de points dite première constellation, procédé dans lequel on compare le point représentatif du signal égalisé à une constellation de référence, on sélectionne le point de ladite constellation de référence qui est le plus proche dudit point représentatif du signal égalisé, on détermine un signal d'erreur fonction de la distance entre ledit point représentatif du signal égalisé et le point de ladite constellation de référencé sélectionné, et on dérive dudit signal d'erreur des signaux de commande pour ajuster les coefficients de l'égaliseur, ce procédé étant caractérisé en ce que:

— la suite de symboles transmis par l'émetteur est une suite de symboles de données dont la configuration est inconnue du récepteur, et

la constellation de référence est une seconde constellation qui a un nombre de points inferieur à celui de ladite première constellation et qui est obtenue à partir de celle-ci:

en divisant ladite première constellation en quatre ensembles de points $S^l$,, $l=1 \ldots, 4$, chacun de ces ensembles comprenant tous les points d'un même quadrant et

en associant chaque ensemble $S^l$ un point $b^l$ de ladite seconde constellation, le point $b^l$ étant obtenu à partir de la relation:

$$b^l = \frac{\sum_{k \varepsilon S^l} |a^k|^2}{\sum_{k \varepsilon S^l} a^{k*}}, \quad l=1, \ldots, 4$$

où * indique la quantité complexe conjuguée,

ε signifie "appartient à", et

les points $a^k$ sont les points de ladite première constellation qui appartiennent à l'ensemble $S^l$.

D'autres variantes pour déterminer les points de la seconde constellation sont définies dans les revendications 2 et 3.

D'autres objets et avantages de la présente invention ressortiront mieux de l'exposé qui suit, fait en référence aux dessins annexés à ce texte, qui représentent deux modes de réalisation préférés de celle-ci.

Brève description des figures

La figure 1 représente un schéma simplifie d'un récepteur QAM incorporant l'invention.

La figures 2 represent une constellation 16 points 4 phases—4 amplitudes.

Les figures 3 et 4 représentent respectivement une constellation 8 points 4 phases—2 amplitudes et la constellation réduite correspondante conforme à un premier mode de réalisation de l'invention.

Les figures 5 et 6 représentent respectivement une constellation 16 points rectangulaire et la constellation réduite correspondante conforme au second mode de réalisation de l'invention.

Les figures 7 et 8 représentent respectivement la constellation de la figure 2 et la constellation réduite correspondante conforme à un troisième mode de réalisation de l'invention.

La figure 9, constituée par l'assemblage des figures 9A à 9D représente le bloc diagramme d'un récepteur QAM incorporant l'invention.

La figure 10 représente en détail le dispositif d'ajustement des coefficients 56 illustré sous forme de bloc dans la figure 9C.

Modes de réalisation de l'invention

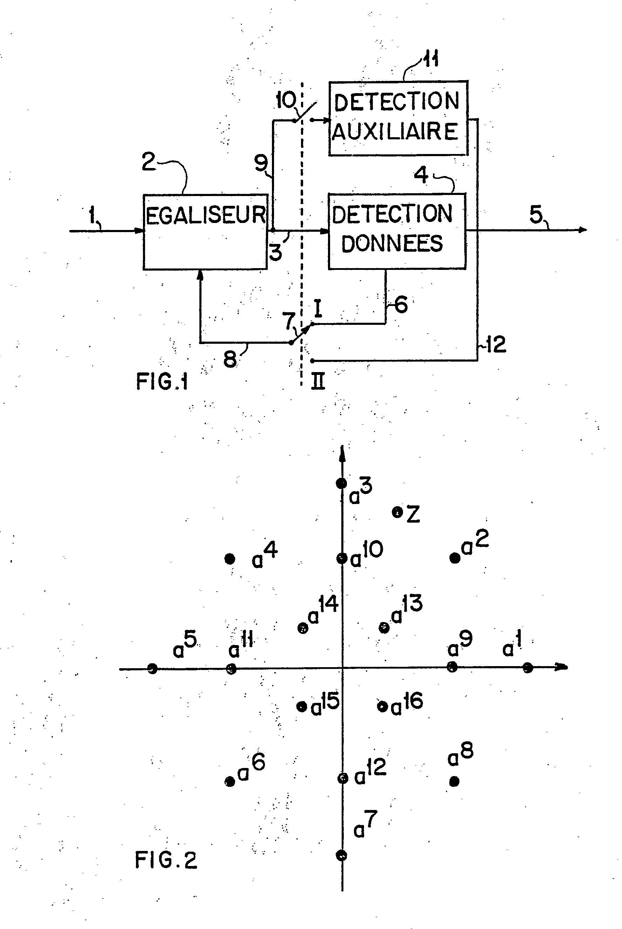

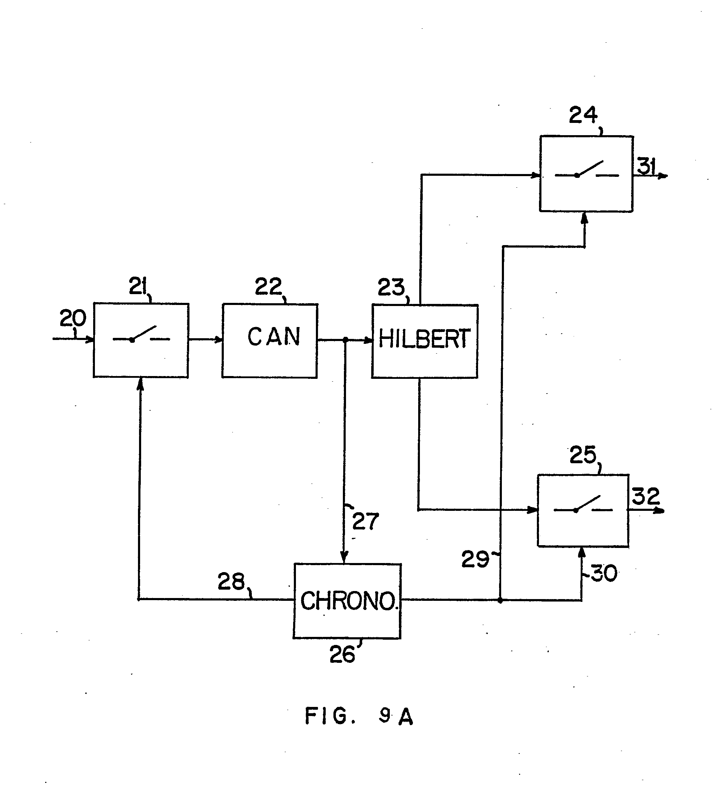

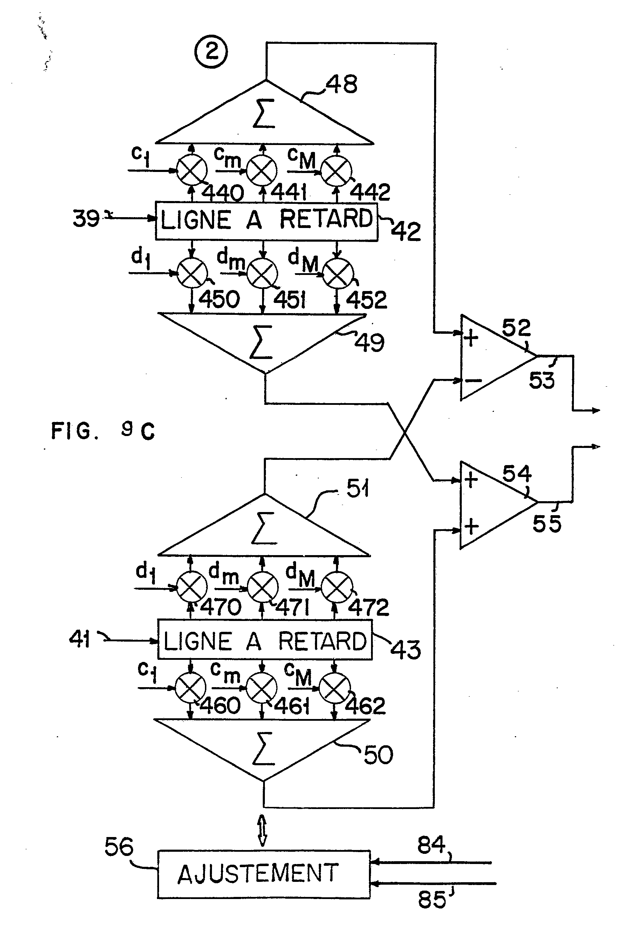

Pour une meilleure compréhension de l'invention on a représenté sur la figure 1 un schéma très simplifié d'un récepteur QAM incorporant l'invention. Une description détaillée de ce récepteur sera faite plus loin en référence aux figures 9A—9D.

Le signal reçu du canal de transmission est échantillonné à la cadence de signalisation 1/T et appliqué par la ligne 1 à l'entrée d'un égaliseur 2. La sortie de l'égaliseur 2 est reliée par la ligne 3 à l'entrée d'un dispositif de détection de données 4 ayant une première sortie reliée à une ligne 5 sur laquelle sont disponibles les données détectées et une seconde sortie reliée à une ligne 6. La ligne 6 est reliée à la position I d'un commutateur à deux positions 7 dont la sortie commune est reliée à l'égaliseur 2 par une ligne 8. La sortie de l'égaliseur 2 est en outre reliée à travers une ligne 9 et un interrupteur 10 à l'entrée d'un dispositif de détection de données auxiliaire 11. La sortie du dispositif de détection de données auxiliaire 11 est reliée par une ligne 12 à la position II du commutateur 7.

On notera que le schéma simplifié illustré sur la figure 1 ne diffère de celui d'un récepteur conventionnel que par la présence du dispositif de détection de données auxiliaire 11 qui est utilisé pour initialiser l'égaliseur 2.

On décrira maintenant le fonctionnement du récepteur illustré sur la figure 1. Dans les systèmes de transmission de données numériques utilisant la modulation QAM, les symboles de données sont transmis à la cadence de signalisation 1/T, chacun d'eux pouvant prendre une des K valeurs $a^k$ ($k=1, 2, \ldots, K$) d'une constellation que l'on désignera par constellation A. Le symbole dont la valeur est $a^k$, ou symbole $a^k$, est transmis en modulant l'amplitude d'une porteuse en phase de forme $\cos \omega_c t$ ($\omega_c$=fréquence angulaire de la porteuse) par la partie réelle de $a^k$, Re $a^k$, et en modulant l'amplitude d'une porteuse en quadrature de forme $\sin \omega_c t$ par la partie imaginaire de $a^k$, Im $a^k$. Les porteuses en phase et en quadrature ainsi modulées sont combinées et transmisses à travers le canal de transmission.

En se référant de nouveau à la figure 1, en fonctionnement normal en mode de données, l'interrupteur 10 est ouvert et le commutateur 7 est en position I, de telle sorte que le dispositif de détection de données 11 est déconnecté du récepteur, et le fonctionnement du récepteur schématisé sur la figure 1 est celui d'un récepteur QAM conventionnel. Le signal reçu du canal de transmission est notamment égalisé dans l'égaliseur 2 et appliqué par la ligne 3 comme signal d'entrée au dispositif de détection de données 4 dans lequel ce signal d'entrée est comparé avec une première constellation qui est en général identique à la constellation A utilisée par l'émetteur. On supposera, par exemple, que la constellation A est la constellation seize point ($K=16$) illustrée sur la figure 2 et connue sous la désignation constellation 4 phases —4 amplitudes. On supposera en outre que le symbole transmis au $n^{ieme}$ instant d'échantillonnage est le symbole $a^3$, et que le signal d'entrée du dispositif 4 est représentatif du point Z porté sur la figure 2. On notera que dans les systèmes réels le point Z ne coïncide pas avec le point représentatif du symbole $a^3$ à cause des perturbations introduites par le canal de transmission. Le dispositif de détection 4 compare le point Z avec les points de la constellation A, décide au moyen de critères prédéterminés que c'est le symbole $a^3$ par exemple, qui a été transmis et fournit la valeur de ce symbole sur la ligne 5. En outre, la dispositif de détection de données 4 fournit un premier signal d'erreur qui est en général fonction de la distance entre le point Z et le point représentatif du symbole sélectionné $a^3$. Ce premier signal d'erreur est appliqué à travers la ligne 6, le commutateur 7 en position I et la ligne 8 à l'égaliseur 2 qui dérive de ce signal d'erreur des signaux de commande pour ajuster ses coefficients.

En fonctionnement normal en mode de données les coefficients de l'égaliseur ont été au préalable ajustés correctement à des valeurs aussi proches que possible des valeurs optimales au cours d'une période d'initialisation, le dispositif de détection de données 4 fait très peu d'erreurs de détection et le signal d'erreur qu'il fournit assure la convergence de l'égaliseur, c'est-à-dire un fonctionnement correct de l'égaliseur.

Lorsque les coefficients de l'égaliseur n'ont pas été ajustés correctement au préalable, soit que le récepteur n'ait pas profité de la période d'initialisation du réseau soit que l'égalisation ait été perdue, comme vu plus haut, beaucoup d'erreurs de détection se produisent et le signal d'erreur fourni par le dispositif de détection de données 4 n'assure plus la convergence de l'égaliseur. Il est alors nécessaire d'initialiser l'égaliseur.

Selon le procédé de l'invention, l'égaliseur est initialisé en réalisant une détection par rapport à une seconde constellation que l'on désignera par constellation B, ayant un nombre de points inférieur un nombre de points de la constellation A utilisée par le dispositif de détection de données 4. En se référant de nouveau à la figure 1, en fonctionnement en mode d'initalisation, l'interrupteur 10 est fermé et le commutateur 7 est mis en position II. Le signal d'entrée du dispositif 4 est aussi appliqué au dispositif de détection de données auxiliaire 11 dans lequel il est comparé aux points de la constellation B. Le dispositif 11 sélectionne le point de la constellation B qui est le plus proche du point Z et fournit un second signal d'erreur qui est en général fonction de la distance entre le point Z et le point sélectionné. Ce second signal d'erreur est appliqué par la ligne 12 à l'égaliseur 2 qui en dérive des signaux de commande pour ajuster ses coefficients.

Selon l'invention, la constellation B est obtenue de la façon qui suit.

Soient $a^k$, $k=1, 2, \ldots, K$, les points de la constellation A et $b^l$, $l=1, 2, \ldots, L$, les points de la constellation B. La constellation A est divisée en L ensembles de points $S^l$, $l=1, 2, \ldots, L$ et on fait correspondre à chaque ensemble $S^l$ un point $b^l$ de la constellation B.

La relation entre les points $b^l$ de la constellation B et les points $a^k$ de la constellation A appartenant à l'ensemble $S^l$ est donnée par la relation suivante:

$$b^l = \frac{\sum\limits_{k \varepsilon S^l} |a^k|^2}{\left(\sum\limits_{k \varepsilon S^l} a^k\right)^*} \qquad l=1, 2, \ldots, L. \qquad (1)$$

(* indique la quantité complexe conjuguée, et $\varepsilon$ signifie "appartient à").

La relation (1) est obtenue de la façon suivante.

L'ajustement des coefficients de l'égaliseur selon la méthode connue du gradient est défini par la relation en notation vectorielle connue:

$$C^{n+1} = C^n - \mu e_n Y_n^* \qquad (2)$$

où
$C^{n+1}$ est le vecteur des valeurs des coefficients de l'égaliseur à la $(n+1)^{ième}$ itération,
$C^n$ est le même vecteur à la $n^{ième}$ itération,
$Y_n$ est le vecteur des signaux emmagasinés dans l'égaliseur à l'instant de signalisation nT,
$\mu$ est une constante, et
$e_n$ est un signal d'erreur à l'instant de signalisation nT.

Pour initialiser l'égaliseur selon l'invention le signal d'erreur $e_n$ est produit par une détection par rapport à la constellation B et on peut l'écrire:

$$e_n = z_n - b_n \qquad (3)$$

où
$z_n$ est le signal de sortie de l'égaliseur à l'instant de signalisation nT, et
$b_n$ est le point de la constellation B détecté par le dispositif de détection de données auxiliaire.

L'égaliseur a convergé lorsque l'espérance mathématique des incréments des coefficients pour toutes les séquences de données possible, est nulle, c'est-à-dire, si

$$E(e_n Y_n^*) = 0 \qquad (4)$$

ou encore d'après (3)

$$b^l = \frac{\sum\limits_{k \varepsilon S^l} |a^k|^2}{\left(\sum\limits_{k \varepsilon S^l} a^k\right)^*} \text{pour } l=1, 2, \ldots, L.$$

La relation ci-dessus est la relation (1) donnée plus haut.

On donnera maintenant quelques exemples de constellation B déterminées conformément à trois modes de réalisation de l'invention.

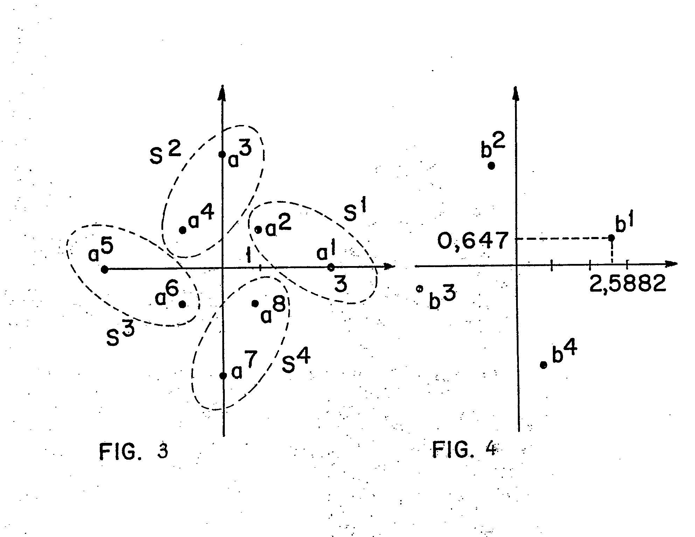

Exemple 1
Soit la constellation A illustrée sur la figure 3. Elle comprend huit points $a^1$ à $a^8$ dont les coordonnées sont respectivement

$a^1 (3,0)$;    $a^2 (1,1)$;    $a^3 (0,3)$;

$a^4 (-1,1)$    $a^5 (-3,0)$;    $a^6 (-1, -1)$;

$a^7 (0, -3)$;    $a^8 (1, -1)$.

Les points $a^1-a^8$ peuvent être représentés par les nombres complexes:

$$a^1=3 \qquad a^2=1+j \qquad a^3=3j$$

$$a^4=-1+j \qquad a^5=-3 \qquad a^6=-1-j$$

$$a^7=-3j \qquad a^8=1-j$$

où $j=\sqrt{-1}$

On divise la constellation en quatre ensembles de deux points comme suit:

$$E(z_n-b_n)Y_n^*=0 \qquad (5)$$

On suppose maintenant que les coefficients de l'égaliseur ont atteint leurs valeurs optimales; le signal de sortie de l'égaliseur est donné alors, en négligeant le bruit, par

$$z_n=a_n \qquad (6)$$

où
$a_n$ est le symbole de la constellation A transmis à l'instant de signalisation nT.

Chaque élément du vecteur $Y_n^*$ peut s'exprimer par

$$y_k=\sum_p a_{k-p}x_p \qquad (7)$$

où
les $x_p$ sont les échantillons du signal élément reçu.

En substituant (6) et (7) dans (5), et pour des symboles de données transmis non corrélés, on obtient

$$\sum_{k \varepsilon S^l} (a^k-b^l)^*a^k=0 \qquad (8)$$

La relation (8) peut s'écrire:
La constellation B qui correspond à cette constellation A comprendra quatre points $b^1$, $b^2$, $b^3$ et $b^4$ associés respectivement aux quatre ensembles $S^1$ à $S^4$.
D'après la relation (1) on a

$$b^1=\frac{|a^1|^2+|a^2|^2}{(a^1+a^2)^*}=\frac{9+2}{(4+j)^*}=\frac{11}{4-j}$$

$$=11\frac{(4+j)}{(4-j)(4+j)}=\frac{11}{17}(4+j)$$

$$=2,5882+0,647\ j.$$

$$b^2=\frac{|a^3|^2+|a^4|^2}{(a^3+a^4)^*}$$

$$=-0,647+2,5882\ j$$

$$b^3=\frac{|a^5|^2+|a^6|^2}{(a^5+a^6)^*}$$

$$=-2,5882-0,64j$$

$$b^4=\frac{|a^7|^2+|a^8|^2}{(a^7+a^8)^*}$$

$$=0,647-2,5882j$$

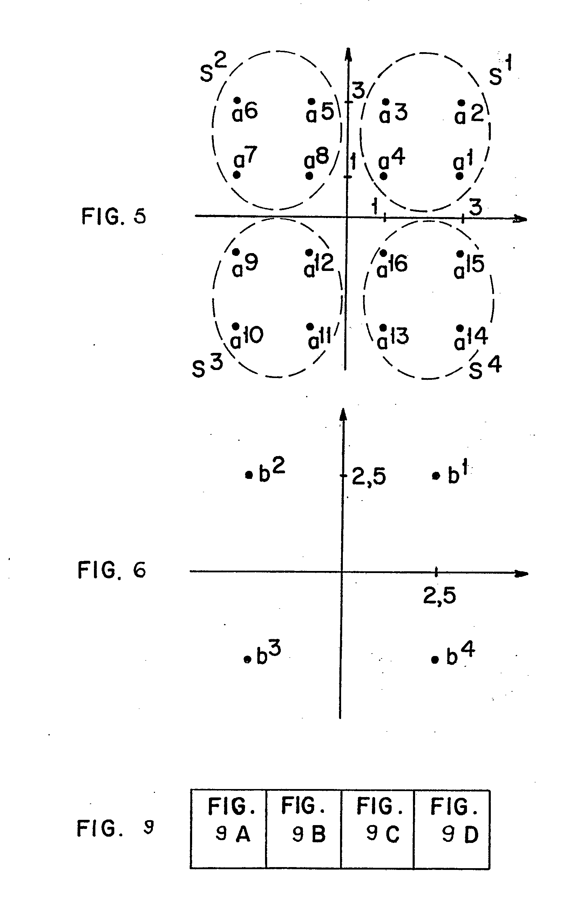

La constellation B comprenant les quatre points $b^1$—$b^4$ déterminés ci-dessus a été illustrée sur la figure 4.

Exemple 2
Soit la constellation 16 états illustrée sur la figure 5. Elle comprend seize points $a^1$—$a^{16}$ dont les coordonnées sont les suivantes:

$$a^1(3,1) \qquad a^2(3,3) \qquad a^3(1,3)$$

$$a^4(1,1) \qquad a^5(-1,3) \qquad a^6(-3,3)$$

$$a^7(-3,1) \qquad a^8(-1,1) \qquad a^9(-3,-1)$$

$$a^{10}(-3,-3) \qquad a^{11}(-1,-3) \qquad a^{12}(-1,-1)$$

$$a^{13}(1,-3) \qquad a^{14}(3,-3) \qquad a^{15}(3,-1)$$

$$a^{16}(1,-1)$$

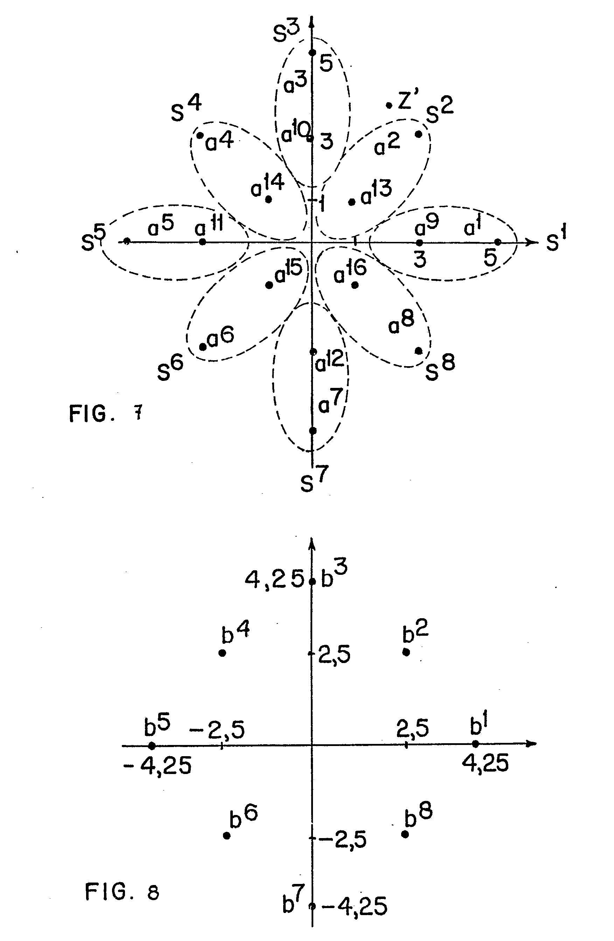

On divise la constellation A de la figure 6 en quatre ensembles de quatre points:

$$S^1(a^1,a^2,a^3,a^4); \ S^2(a^5,a^6,a^7,a^8)$$
$$S^3(a^9,a^{10},a^{11},a^{12}); \ S^4(a^{13},a^{14},a^{15},a^{16}).$$

la constellation B correspondante comprend quatre points $b^1$—$b^4$ associés respectivement aux ensembles $S^1$—$S^4$.
D'après la relation (1) on a

$$b^1=\frac{|a^1|^2+|a^2|^2+|a^3|^2+|a^4|^2}{(a^1+a^2+a^3+a^4)^*}$$

$$=\frac{40}{(8+8j)^*}=\frac{5}{(1+j)^*}=\frac{5}{1-j}$$

$$=\frac{5(1+j)}{(1-j)(1+j)}=2,5\ (1+j)$$

On obtient de même

$$b^2=2,5\ (-1+j)$$
$$b^3=2,5\ (-1-j)$$
$$b^4=2,5\ (1-j)$$

La constellation B comprenant ces quatre points $b^1$—$b^4$ a été illustrée sur la figure 6.

**Exemple 3**

Soit la constellation 16 états 4 phases—4 amplitudes recommandée par l'Avis V29 du CCITT et illustrée sur la figure 7. Elle comprend les seize points $a^1$–$a^{16}$ dont les coordonnées sont respectivement:

$a^1(5,0)$ $\quad$ $a^2(3,3)$ $\quad$ $a^3(0,5)$

$a^4(-3,3)$ $\quad$ $a^5(-5,0)$ $\quad$ $a^6(-3,-3)$

$a^7(0,-5)$ $\quad$ $a^8(3,-3)$ $\quad$ $a^9(3,0)$

$a^{10}(0,3)$ $\quad$ $a^{11}(-3,0)$ $\quad$ $a^{12}(0,-3)$

$a^{13}(1,1)$ $\quad$ $a^{14}(-1,1)$ $\quad$ $a^{15}(-1,-1)$

$a^{16}(1,-1)$

On divise cette constellation en huit ensembles de deux points.

$S^1(a^1,a^9);$ $\quad$ $S^2(a^2,a^{13});$ $\quad$ $S^3(a^3,a^{10});$

$S^4(a^4,a^{14})$ $\quad$ $S^5(a^4,a^{11});$ $\quad$ $S^6(a^6,a^{15});$

$S^7(a^7,a^{12});$ $\quad$ $S^8(a^8,a^{16})$

La constellation B correspondante comprendra huit points $b^1$–$b^8$ associés respectivement aux ensembles $S^1$–$S^8$.

D'après la relation (1) on a

$$b^1 = \frac{|a^1|^2 + |a^9|^2}{(a^1+a^9)^*} = \frac{25+9}{8} = 4,25$$

$$b^2 = \frac{|a^2|^2 + |a^{13}|^2}{(a^2+a^{13})^*} = \frac{18+2}{(4+4j)^*} = \frac{20}{4(1-j)}$$

$$= \frac{20}{4} \cdot \frac{1+j}{(1-j)(1+j)} = \frac{20}{4} \cdot \frac{1+j}{2}$$

$$= \frac{20}{8}(1+j) = 2,5(1+j)$$

De même on obtiendra:

$b^3 = 4,25j$
$b^4 = 2,5(-1+j)$
$b^5 = -4,25$
$b^6 = 2,5(-1-j)$
$b^7 = -4,25j$
$b^8 = 2,5(1-j)$

La constellation B comprenant ces huit points $b^1$–$b^8$ a été illustrée sur la figure 8.

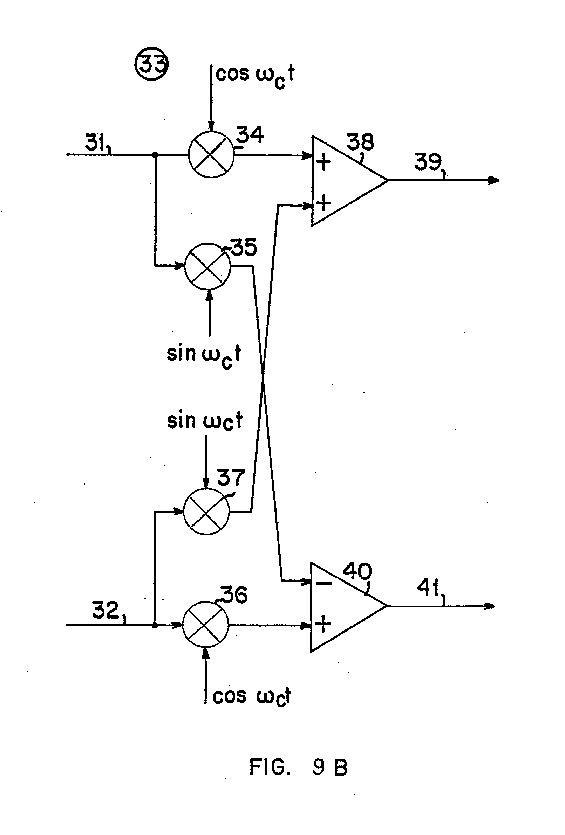

On a représenté sur la figure 9 composée des figures 9A à 9D le bloc diagramme détaillé d'un récepteur QAM 9600 bits par seconde conforme à l'Avis V29 du CCITT et incorporant l'invention. En se référant à la figure 9A, le signal reçu du canal de transmission, dont l'énergie a été normalisée par un circuit de contrôle automatique de gain (non représenté) et qui a été filtré par un filtre passe bande (non représenté) qui rejette le bruit hors bande, est appliqué par une ligne 20 à un dispositif d'échantillonnage 21 dans lequel il est échantillonné à la cadence $1/\tau$. La cadence $1/\tau$ est choisie égale à un multiple m/T de la fréquence de signalisation 1/T de façon à ce que l'on dispose à la sortie du dispositif 21 d'un nombre d'échantillons suffisant pour bien définir le signal reçu. La valeur de l'amplitude de ces échantillons est convertie en numérique dans un convertisseur analogique-numérique 22 et appliquée à l'entrée d'un transformateur de Hilbert numérique 23.

Un transformateur de Hilbert est un dispositif qui a une entrée et deux sorties et qui fournit respectivement à ses deux sorties les composantes en phase et en quadrature du signal appliqué à son entrée. On en trouvera un exemple de réalisation numérique dans l'article "Theory and Implementation of the Discrete Hilbert Transform", paru dans "Digital Signal Processing", L. R. Robiner et C. M. Rader, 1972 IEEE Press. Les composantes en phase et en quadrature du signal reçu fournies par le transformateur de Hilbert 23 sont respectivement ré-échantillonnées à la cadence de signalisation 1/T par deux dispositif d'échantillonnage 24 et 25. Un dispositif de récupération de chronologie 26 a son entrée reliée par une ligne 27 à la sortie du convertisseur analogiquenumérique 22 et commande les dispositifs d'échantillonnage 21, 24 et 25 par des lignes 28, 29 et 30 et tous les autres composants du récepteur par des lignes non représentées. On trouvera un exemple de réalisation d'un tel dispositif de récupération de chronologie dans le brevet français No. 75 14020 déposé par la demanderesse le 25 avril 1975 et publié sous le No. 2 309 089. Les composantes en phase et en quadrature disponibles respectivement à la sortie des dispositifs d'échantillonnage 24 et 25 sur les lignes 31 et 32 sont démodulées dans un démodulateur 33 (figure 9B). Le démodulateur 33 comprend de façon connue deux multiplicateurs 34 et 35 dont une première entrée est reliée à la ligne 31 et deux multiplicateurs 36 et 37 dont une première entrée est reliée à la ligne 32. Les deuxièmes entrées des multiplicateurs 34 et 36 reçoivent une porteuse en phase de la forme $\cos \omega_c t$ alors que les deuxièmes entrées des multiplicateurs 35 et 37 reçoivent une porteuse en quadrature de la forme $\sin \omega_c t$. Les porteuses en phase et en quadrature sont fournies par une source locale non représentée.

La sortie du multiplicateur 37 est additionnée à celle du multiplicateur 34 dans un additionneur binaire 38 dont la sortie est reliée à une ligne 39. La sortie du multiplicateur 35 est retranchée de celle du multiplicateur 36 dans un soustracteur binaire 40 dont la sortie est reliée à une ligne 41. On obtient respectivement sur les lignes 39 et 41 les composantes en phase et en quadrature du signal reçu démodulé.

Si on désigne par $r_n$ le signal reçu à l'instant de signalisation nT, ses composantes en phase et en quadrature disponibles respectivement sur les lignes 31 et 32 peuvent s'exprimer par $r_{i,n}$ et $r_{q,n}$ respectivement. On vérifiera qu'on obtient alors sur les lignes 39 et 41 les composantes en phase et en quadrature, respectivement $y_{i,n}$ et $y_{q,n}$ du signal reçu démodulé $y_n$, conformément aus relations connues:

$$y_{i,n}=r_{i,n}\cos\omega_c t+r_{q,n}\sin\omega_c t \qquad (9)$$

$$y_{q,n}=-r_{i,n}\sin\omega_c t+r_{q,n}\cos\omega_c t \qquad (10)$$

Les composantes en phase et en quadrature du signal reçu démodulé sont appliquées par les lignes 39 et 41 aux entrées d'un égaliseur transversal complexe adaptatif 2 (figure 9C). On trouvera une description détaillée de cet égaliseur dans le brevet français No. 73 26404 déposé par la demanderesse le 12 juillet 1973 et publié sous le No. 2 237 379.

Le signal égalisé obtenu à la sortie de l'égaliseur à l'instant de signalisation nT, que l'on désignera par $z_n$, s'exprime de façon connue par

$$z_n= \sum_{m=1}^{M} y_{n-m}C_m \qquad (11)$$

où

M représente le nombre de prises de l'égaliseur,

$C_m$ les coefficients de l'égaliseur, et

$y_{n-m}$ le signal reçu démodulé présent sur la $m^{\text{ième}}$ prise.

Dans le cas d'un récepteur QAM les quantités $z_n$, $y_{n-m}$ et $C_m$ sont des quantités complexes

$$z_n=z_{i,n}+jz_{q,n}$$

$$y_{n-m}=y_{i,n-m}+jy_{q,n-m}$$

$$C_m=c_m+jd_m$$

et la relation (11) peut s'écrire:

$$z_{i,n}= \sum_{m=1}^{M} y_{i,n-m}c_m- \sum_{m=1}^{M} y_{q,n-m}d_m \quad (12)$$

$$z_{q,n}= \sum_{m=1}^{M} y_{i,n-m}d_m+ \sum_{m=1}^{M} y_{q,n-m}c_m \quad (13)$$

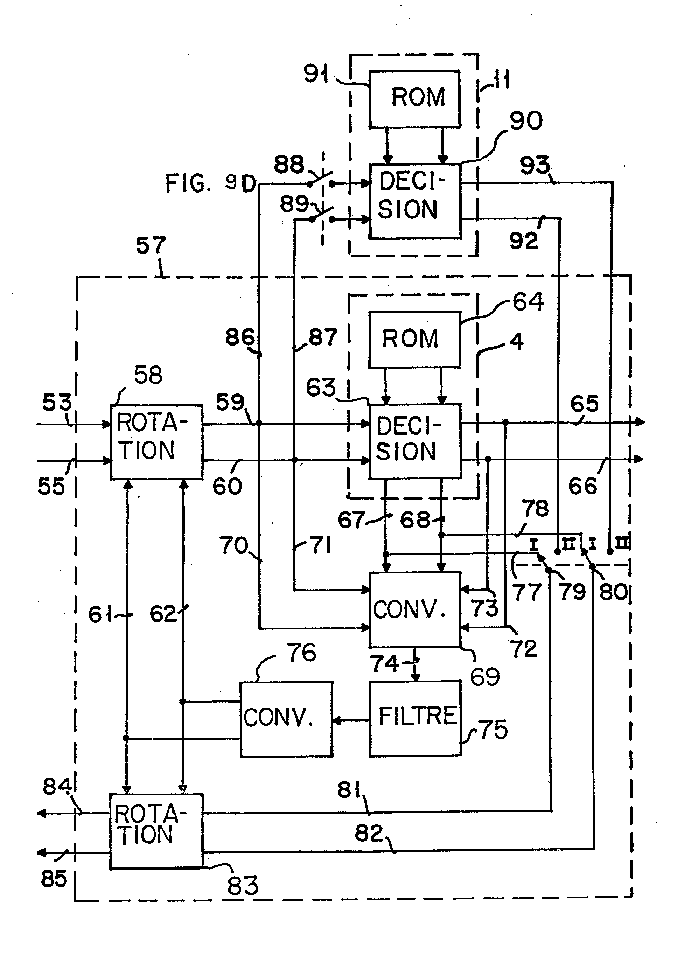

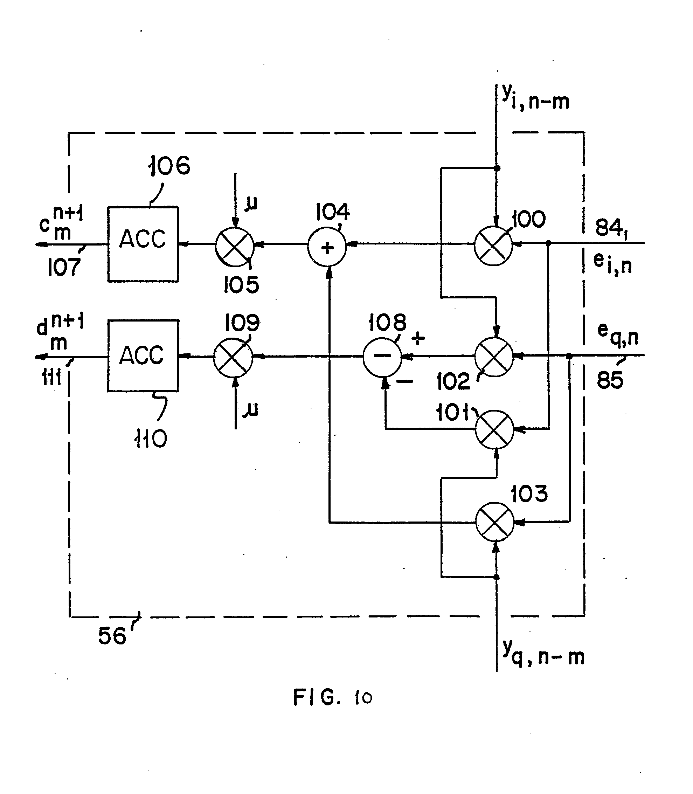

L'égaliseur 2 illustré sur la figure 9C met en oeuvre les relations (12) et (13). Il comprend deux lignes à retard à M prises 42 et 43 dans lesquelles sont emmagasinées respectivement les composantes en phase et en quadrature du signal reçu démodulé. Le retard entre deux prises adjacentes est égal à la période de signalisation T. Les prises de la ligne à retard 42 sont reliées respectivement à une première entrée de M multiplicateurs 440, ..., 441, ..., 442 et à une première entrée de M multiplicateurs 450, ..., 451, ..., 452. Les secondes entrées des multiplicateurs 440, ..., 441, ..., 442 reçoivent respectivement les coefficients $c_1$, ..., $c_m$, ..., $c_M$ alors que les secondes entrées des multiplicateurs 450, ..., 451, ..., 452 reçoivent respectivement les coefficients $d_1$, ..., $d_m$, ...; $d_M$. Les prises de la ligne à retard 43 sont reliées respectivement à une première entrée de M multiplicateurs 460, ..., 461, ..., 462, et à une première entrée de M multiplicateurs 470, ..., 471, ..., 472. Les secondes entrées des multiplicateurs 460, ..., 461, ..., 462 reçoivent respectivement les coefficients $c_1$, ..., $c_m$, ..., $c_M$, alors que les secondes entrées des multiplicateurs 470, ..., 471, ..., 472 reçoivent respectivement les coefficients $d_1$, ..., $d_m$, ..., $d_M$. Les sorties des multiplicateurs 440, ..., 442 sont sommées dans un sommateur 48. Les sorties des multiplicateurs 450, ..., 452 sont sommées dans un sommateur 49. Les sorties des multiplicateurs 460, ..., 462, sont sommées dans un sommateur 50. Les sorties des multiplicateurs 470, ..., 472 sont sommées dans un sommateur 51. La sortie du sommateur 51 est retranchée de celle du sommateur 48 dans un soustracteur 52 dont la sortie est reliée à une ligne 53. Les sorties des sommateurs 49 et 50 sont additionnées dans un additionneur 54 dont la sortie est reliée à une ligne 55. On vérifiera qu'on obtient respectivement sur les lignes 53 et 55 les composantes $z_{i,n}$ et $z_{q,n}$ conformément aux relations (12) et (13). Les coefficients de l'égaliseur sont ajustés par un dispositif d'ajustement des coefficients 56 qui sera décrit plus loin en référence à la figure 10.

Les composantes $z_{i,n}$ et $z_{q,n}$ du signal égalisé sont appliquées respectivement par les lignes 53 et 55 aux entrées d'un système de détection de données 57 (figure 9D). On trouvera une description détaillée du système de détection de données 57 dans le brevet français No. 74 43560 déposé par la demanderesse le 27 décembre 1974 et publié sous le No. 2 296 322. Dans le système 57, les composantes $z_{i,n}$ et $z_{q,n}$ sont appliquées aux entrées d'un dispositif de rotation de phase 58 qui fait tourner le phase du signal égalisé d'un angle égal à $-\Delta\tilde{\phi}_n$, $\Delta\tilde{\phi}_n$ étant une valeur estimée d'erreur de phase. L'homme de l'art comprendra que le dispositif de rotation de phase 58 est un moyen pour retrancher la valeur $\Delta\tilde{\phi}_n$ de la phase du signal $z_n$. On notera les composantes du signal égalisé après rotation par $z'_{i,n}$ et $z'_{q,n}$ respectivement. Le dispositif de rotation de phase 58 peut être réalisé par un arrangement mettant en oeuvre les relations connues:

$$z'_{i,n}=z_{i,n}\cos\Delta\tilde{\phi}_n+z_{q,n}\sin\Delta\tilde{\phi}_n \quad (14)$$

$$z'_{q,n}=-z_{i,n}\sin\Delta\tilde{\phi}_n+z_{q,n}\cos\Delta\tilde{\phi}_n \quad (15)$$

Le dispositif 58 reçoit les quantités $\cos\Delta\tilde{\phi}_n$ et $\sin\Delta\tilde{\phi}_n$ par les lignes 61 et 62 respectivement. Les composantes $z'_{i,n}$ et $z'_{q,n}$ sont appliquées par des lignes 59 et 60 aux entrées d'un dispositif de détection de données 4 qui comprend une logique de décision 63 et une mémoire permamente 64. Les composantes $z'_{i,n}$ et $z'_{q,n}$ sont appliquées par les lignes 59 et 60 aux entrées de la logique de décision 63 qui reçoit aussi deux entrées de la mémoire permanente ROM 64 et fournit les composantes en phase et en quadrature du symbole de données détecté sur des lignes 65 et 66 respectivement, et les composantes d'un premier signal d'erreur qui sont appliquées par les lignes 67 et 68 à un premier dispositif de conversion 69. Le dispositif 69 reçoit en outre par des lignes 70 et 71 les composantes $z'_{i,n}$ et $z'_{q,n}$ et par des lignes 72 et 73 les composantes du symbole de données détecté. Le dispositif de conversion 69 fournit à sa sortie la valeur de l'erreur de phase résiduelle qui est appliquée par une ligne 74 à un filtre de phase prédictif 75. Le filtre de phase 75 fournit à sa sortie l'erreur de phase estimée $\Delta\tilde{\phi}_n$ qui est appliquée à un second dispositif de conversion 76 qui fournit à ses sorties reliées aux lignes 61 et 62 les fonctions trigonométriques $\cos\Delta\tilde{\phi}_n$ et $\sin\Delta\tilde{\phi}_n$. Les lignes 67 et 68 sont reliées respectivement par des lignes 77 et 78 à la position I de deux commutateurs à deux positions 79 et 80 dont les sorties communes sont reliées respectivement par des lignes 81 et 82 aux entrées d'un second dispositif de rotation de phase 83. Le dispositif 83 reçoit en outre les quantités $\cos\Delta\tilde{\phi}_n$ et $\sin\Delta\tilde{\phi}_n$ par les lignes 61 et 62 et a deux sorties reliées par des lignes 84 et 85 au dispositif d'ajustement des coefficients 56 (figure 9C).

Les composantes $z'_{i,n}$ et $z'_{q,n}$ fournies par le dispositif de rotation de phase 58 sont appliquées respectivement à travers deux lignes 86 et 87 et deux interrupteurs 88 et 89 aux entrées d'un dispositif de détection de données auxiliaire 11 qui comprend une logique de décision 90 et une mémoire permanente ROM 91. La logique de décision 90 a deux entrées reliées respectivement aux lignes 88 et 89 et deux autres entrées reliées à la mémoire permamente ROM 91. La logique de décision 90 a deux sorties reliées respectivement par des lignes 92 et 93 à la position II des commutateurs 79 et 80.

En fonctionnement normal en mode de données, les interrupteurs 88 et 89 sont ouverts et les commutateurs 79 et 80 sont en position I, le dispositif de détection de données auxiliaire 11 est déconnecté du système de détection de données 57 qui fonctionne de façon identique à celle du système de détection de données décrit en détail dans FR—A—2296322. En bref, les composantes $z_{i,n}$ et $z_{q,n}$ de signal égalisé sont appliquées au dispositif de rotation de phase 58 qui fait tourner la phase du signal égalisé d'un angle égal à $-\Delta\tilde{\phi}_n$. Les composantes $z'_{i,n}$ et $z'_{q,n}$ du signal égalisé après rotation qui sont les composantes du signal d'entrée du dispositif de détection de données 4, sont appliquées à la logique de décision 63. Par la suite on désignera le signal de composantes $z'_{i,n}$ et $z'_{q,n}$ par le terme signal d'entrée. On peut représenter le signal d'entrée par un point Z' sur la constellation A de la figure 7. La point Z' a pour coordonnées $z'_{i,n}$ et $z'_{q,n}$. La fonction du dispositif de détection 4 est de comparer le point Z' à tous les points $a^1-a^{16}$ de la constellation A et de sélectionner le point de la constellation qui est le plus proche de Z'. Dans l'exemple de la figure 7 il s'agit du point $a^2$. La logique de décision 63 sélectionne le point $a^2$ en calculant les distances séparant le point Z' de tous les points $a^1-a^{16}$ puis en sélectionnant la plus courte de ces distances. Pour cela la logique de décision 63 reçoit les coordonnées des points $a^1-a^{16}$ emmagasinées dans la mémoire permanente 64. On trouvera un exemple de logique de décision dans FR—A—2 296 322 précité. Après avoir sélectionné le point $a^2$, la logique 63 fournit sur les lignes 65 et 66 des coordonnées de ce point qui sont représentatives des données et calcule les composantes, que l'on notera $\Delta_a z'_{i,n}$ et $\Delta_a z'_{q,n}$ d'un premier signal d'erreur $\varepsilon_n$, d'après les relations suivantes:

$$\Delta_a z'_{i,n}=z'_{i,n}-a_i^2 \quad (16)$$

$$\Delta_a z'_{q,n}=z'_{q,n}-a_q^2 \quad (17)$$

où $a_i^2$ et $a_q^2$ représentent les coordonnées du point $a^2$.

Les composantes $\Delta a z'_{i,n}$ et $\Delta_a z'_{q,n}$ du signal d'erreur $\varepsilon_n$, les composantes $z'_{i,n}$ et $z'_{q,n}$ du signal d'entrée et les composantes $a_i^2$ et $a_q^2$ du point sélectionné de la constellation A sont appliquées au dispositif de conversion 69 par les lignes 67, 68, 70, 71, 72 et 73 respectivement. Le dispositif de conversion 69 fournit à sa sortie sur la ligne 74 une erreur de phase résiduelle $\delta\phi_n$ est égale à la différence entre la phase du signal d'entrée et la phase du point $a^2$ sélectionné. Le dispositif de conversion 69 est un arrangement calculant l'erreur de phase $\delta\phi_n$ d'après la relation

$$\delta\phi_n=\frac{z'_{i,n}\Delta_a z'_{q,n}-z'_{q,n}\Delta_a z'_{i,n}}{a_i^2 z'_{i,n}+a_q^2 z'_{q,n}} \quad (18)$$

Pour plus de détails on se réfèrera au FR—A—2 296 322 L'erreur de phase résiduelle $\delta\phi_n$ est appliquée par la ligne 71 à l'entrée du filtre de phase prédictif 75 dont la fonction est de fournir une valeur estimée d'erreur de phase $\Delta\tilde{\phi}_n$ à partir des erreurs de phase résiduelles antérieures. Un tel filtre prédictif est décrit en détail dans le brevet français No. 74 30001 déposé par la demanderesse le 30 août 1974 et publié sous le No. 2 283 606 et dans le FR—A—2 296 322 auxquels on se référera. La valeur estimée d'erreur de phase $\Delta\widetilde{\phi}_n$ fournie par le filtre 75 est appliquée au dispositif de conversion 76 qui convertit $\Delta\widetilde{\phi}_n$ en cos $\Delta\widetilde{\phi}_n$ et sin $\Delta\widetilde{\phi}_n$. Le dispositif de conversion 76 est constitué de façon connue par une mémoire permamente dans laquelle les valeurs de cos $\Delta\widetilde{\phi}_n$ et sin $\Delta\widetilde{\phi}_n$ sont emmagasinées à l'adresse correspondant à la valeur de $\Delta\widetilde{\phi}_n$. Les valeurs de cos $\Delta\widetilde{\phi}_n$ et sin $\Delta\widetilde{\phi}_n$ fournies par le dispositif de conversion 76 sont appliquées par les lignes 61 et 62 aux dispositifs de rotation de phase 58 et 83.

En fonctionnement normal, c'est à partir du signal d'erreur $\varepsilon_n$ fourni par la logique de décision 63 que sont dérivés les signaux de commande des coefficients de l'égaliseur 2. Cependant pour tenir compte du fait que l'égaliseur est chargé avec les signaux $z_n$ et que le signal d'erreur $\varepsilon_n$ est obtenu à partir des signaux d'entrée $z'_n$, dont la phase diffère de celle des signaux $z_n$ de la quantité $\Delta\widetilde{\phi}_n$, on rajoute à la phase du signal d'erreur $\varepsilon_n$ la valeur $\Delta\widetilde{\phi}_n$ avant ne l'appliquer au dispositif d'ajustement 56.

En se référant de nouveau à la figure 9D, les composantes $\Delta_a z'_{i,n}$ et $\Delta_a z'_{q,n}$ fournies par la logique de décision 63 sont en outre appliquées respectivement à travers les lignes 77 et 78, les commutateurs 79 et 80 en position I et les lignes 81 et 82 aux entrées du dispositif de rotation 83 qui reçoit aussi les valeurs de cos $\Delta\widetilde{\phi}_n$ et sin $\Delta\widetilde{\phi}_n$ par les lignes 61 et 62. Le dispositif de rotation de phase 83 est semblable au dispositif 58 et fait tourner la phase du signal de composantes $\Delta_a z'_{i,n}$ et $\Delta_a z'_{q,n}$ d'un angle égal à $\Delta\widetilde{\phi}_n$.

L'homme de l'art comprendra que le dispositif de rotation de phase 83 est un moyen pour ajouter $\Delta\widetilde{\phi}_n$ à la phase du signal d'erreur $\varepsilon_n$. C'est le signal ainsi obtenu après rotation qui est utilisé comme signal d'erreur $e_n$ pour l'ajustement des coefficients de l'égaliseur. Le dispositif 83 fournit respectivement sur les lignes 84 et 85 les composantes en phase et en quadrature, notées $e_{i,n}$ et $e_{q,n}$, du signal d'erreur $e_n$. Les composantes $e_{i,n}$ et $e_{q,n}$ sont appliquées par les lignes 84 et 85 au dispositif d'ajustement des coefficients 56 (figure 9C) qui en dérive les signaux de commande pour ajuster les coefficients de l'égaliseur et qui sera décrit plus loin en référence à la figure 10.

En fonctionnement en mode d'initialisation, les interrupteurs 88 et 89 sont fermés et les commutateurs 79 et 80 sont en position II, ce qui met en fonction le dispositif de détection auxiliaire 11 et déconnecte le dispositif de détection de données 4 des lignes 81 et 82. Le dispositif de détection de données 4 fonctionne comme en mode de données si ce n'est qu'il n'alimente plus le dispositif d'ajustement des coefficients 56. On notera notamment que c'est toujours le dispositif de détection de données 4 qui alimente le filtre de phase 75 et les dispositifs de rotation de phase 58 et 83. Les composantes $z'_{i,n}$ et $z'_{q,n}$ du signal d'entrée, fournies par le dispositif de rotation 58 sont appliquées respectivement par les lignes 86 et 87 et les interrupteurs fermés 88 et 89 aux entrées de la logique de décision 90 dont la structure est semblable à celle de la logique de décision 63. La fonction de la logique 90 est de comparer le point $Z'$ à tous les points $b^1$—$b^8$ de la constellation réduite B, de sélectionner le point de la constellation B qui est le plus proche de $Z'$, par exemple, le point $b^2$ (figure 7), et de fournir un signal d'erreur, noté $e'_n$, représentatif de l'erreur entre le point $Z'$ et le point sélectionné de la constellation B. Pour cela, la logique de décision 90 reçoit de la mémoire permanente 91 les coordonnées des points $b^1$—$b^8$ de la constellation B, calcule les distances entre le point $Z'$ et les points $b^1$—$b^8$, sélectionne le point le plus proche de $Z'$, par exemple le point $b^2$ et calcule les composantes, que l'on notera $\Delta_b z'_{i,n}$ et $\Delta_b z'_{q,n}$ du signal d'erreur $e'_n$ d'après les relations

$$\Delta_b z'_{i,n} = z'_{i,n} - b^2_i$$

$$\Delta_b z'_{q,n} = z'_{q,n} - b^2_q$$

où $b^2_i$ et $b^2_q$ sont les coordonnées du point $b^2$ dans le plan complexe.

En fonctionnement en mode d'initialisation, c'est à partir du signal d'erreur $e'_n$ fourni par le dispositif de détection de données auxiliaire 11 que sont dérivés les signaux de commande des coefficients de l'égaliseur 2. Cependant, dans l'exemple en réalisation illustré sur la figure 9D comme vu précédemment on ajoute $\Delta\widetilde{\phi}_n$ à la phase du signal d'erreur $e'_n$ avant de l'appliquer au dispositif d'ajustement 56.

En se référant de nouveau à la figure 9D, les composantes $\Delta_b z'_{i,n}$ et $\Delta_b z'_{q,n}$ fournies par le dispositif de détection de données auxiliaire 11 sont appliquées respectivement par les lignes 92 et 93, les commutateurs 79 et 80 en position II et les lignes 81 et 82 aux entrées du dispositif de rotation de phase 83. Le dispositif de rotation 83 ajoute le valeur de $\Delta\widetilde{\phi}_n$ à la phase du signal d'erreur $e'_n$ et c'est le signal ainsi obtenu après rotation que l'on désignera par signal d'erreur $e_n$ qui est appliqué au dispositif d'ajustement 56. Le dispositif de rotation de phase 83 fournit respectivement sur les lignes 84 et 85 les composantes du signal d'erreur $e_n$ notées $e_{i,n}$ et $e_{q,n}$, soit sont appliquées au dispositif d'ajustement 56 qui en dérive les signaux de commande pour ajuster les coefficients de l'égaliseur 2.

On va maintenant décrire brièvement le dispositif d'ajustement des coefficients de l'égaliseur en se référant à la figure 10. Les coefficients de l'égaliseur sont ajustés selon la méthode connue du gradient qui est définie par la relation (2) rappelée ci-dessous:

$$C^{n+1} = C - \mu e_n Y_n^* \qquad (2)$$

où

$C^{n+1}$ représente le vecteur des valeurs des coefficients $C_o, \ldots, C_m, \ldots, C_M$ de l'égaliseur à la $(n+1)^{\text{ième}}$ itération.

$C^n$ représente le vecteur des valeurs de $C_o, \ldots, C_M$ à la $n^{\text{ième}}$ itération.

$e_n$ est le signal d'erreur qui dans l'exemple de réalisation est le signal de composantes $e_{i,n}$ et $e_{q,n}$ qui sont fournies par le dispositif de rotation de phase 83, et

$Y_n$ est le vecteur des signaux emmagasinés dans l'égaliseur à l'instant de signalisation $nT$, c'est-à-dire le vecteur des signaux $y_n, y_{n-1}, \ldots, y_{n-m}, \ldots, y_M$,

$\mu$ est une constante de pondération.

Les coefficients $C_m$ sont des coefficients complexes

$$C_m = c_m + j \, d_m \qquad (19)$$

Le signal d'erreur $e_n$ peut s'écrire:

$$e_n = e_{i,n} + j \, e_{q,n} \qquad (20)$$

Le signal $y_n$ est un signal complexe

$$y_n = y_{i,n} + j \, y_{q,n} \qquad (21)$$

En considérant les relations (15), (20) et (21) on peut obtenir à partir de la relation (2)

$$c_m^{n+1} = c_m^n - \mu(e_{i,n} y_{i,n-m} + e_{q,n} y_{q,n-m}) \qquad (22)$$

$$d_m^{n+1} = d_m^n - \mu(e_{q,n} y_{i,n-m} - e_{i,n} y_{q,n-m}) \qquad (23)$$

pour $n = 1, 2, \ldots, M$.

Le dispositif d'ajustement des coefficients 56 met en oeuvre les relations (22) et (23). Dans un souci de simplification on n'a illustré sur la figure 10 que les circuits associés à l'ajustement des coefficients $c_m$ et $d_m$.

La composante $e_{i,n}$ fournie par le dispositif de rotation de phase 83 est appliquée par la ligne 84 à une première entrée de deux multiplicateurs 100 et 101. La seconde entrée du multiplicateur 100 reçoit la composante $y_{i,n-m}$ de la $m^{\text{ième}}$ prise de la ligne à retard 42. On obtient à la sortie du multiplicateur 100 le produit $e_{i,n} y_{i,n-m}$. La composante $e_{q,n}$ fournie par le dispositif 83 est appliquée par la ligne 85 à une première entrée de deux multiplicateurs 102 et 103. La seconde entrée du multiplicateur 103 reçoit la composante $y_{q,n-m}$ de la $m^{\text{ième}}$ prise de la ligne à retard 43. On obtient à la sortie du multiplicateur 103 le produit $e_{q,n} y_{q,n-m}$ qui est ajouté au produit $e_{i,n} y_{i,n-m}$ fourni par le multiplicateur 100 dans un additionneur 104. La sortie de l'additionneur 104 est multipliée par la quantité $\mu$ dans un multiplicateur 105 qui fournit le signal de commande

$$\mu(e_{i,n} \, y_{i,n-m} + e_{q,n} \, y_{q,n-m})$$

qui est retranché de la valeur $c_m^n$ du coefficient $c_m$ stockée dans un accumulateur 106. L'accumulateur 106 contient alors la nouvelle valeur $c_m^{n+1}$ du coefficient $c_m$ qui est appliquée aux multiplicateurs 441 et 461 par la ligne 107.

La seconde entrée du multiplicateur 102 reçoit la composante $y_{i,n-m}$, alors que la seconde entrée du multiplicateur 101 reçoit la composante $y_{q,n-m}$. La sortie du multiplicateur 101 est retranchée de la sortie du multiplicateur 102 dans un soustracteur 108 dont la sortie est multipliée par la quantité $\mu$ dans un multiplicateur 109. On obtient à la sortie du multiplicateur 109 le signal de commande:

$$\mu(e_{q,n} \, y_{i,n-m} - e_{i,n} \, y_{q,n-m})$$

qui est retranché de la valeur $d_m^n$ du coefficient $d_m$ stockée dans un accumulateur 110. L'accumulateur 110 contient alors la nouvelle valeur $d_m^{n+1}$ du coefficient $d_m$, qui est appliquée par la ligne 111 aux multiplicateurs 451 et 471.

Dans le schéma de la figure 1 on a représenté le dispositif de détection de données 4 et le dispositif de détection de données auxiliaire 11 alimentés directement par le signal de sortie de l'égaliseur 2. Dans le schéma de la figure 9 on a représenté le dispositif de détection de données 4 et le dispositif de détection de données auxiliaire 11 alimentés non pas le signal de sortie de l'égaliseur 2 mais par le signal de sortie de l'égaliseur dont la phase a été diminuée de $\Delta\phi_n$. L'homme de l'art comprendra que selon l'invention il est important que ce soit le même signal, désigné signal d'entrée, qui alimente le dispositif de détection de données et le dispositif de détection de données auxiliaire et que ce signal d'entrée peut résulter d'un traitement du signal de sortie de l'égaliseur. Ce traitement peut être, par exemple, une action sur la phase du signal de sortie de l'égaliseur comme dans l'exemple illustré sur la figure 5, ou une opération de démodulation comme dans certaines structures connues des récepteurs.

L'homme de l'art comprendra aussi que le signal d'erreur fourni par le dispositif de détection de données auxiliaire peut être appliqué soit directement soit indirectement selon la structure du récepteur, au dispositif d'ajustement des coefficients 56.

## Revendications

1. Procédé pour initialiser l'égaliseur adaptatif d'un récepteur de données dans un système de transmission de données utilisant une modulation QAM dans lequel l'émetteur associé à ce récepteur transmet une suite de symboles appartenant à un ensemble de $2^Q$

symboles qui peut être représenté sur un plan complexe par une répartition de points dite première constellation, procédé dans lequel on compare le point représentatif du signal égalisé à une constellation de référence, on sélectionne le point de ladite constellation de référence qui est le plus proche dudit point représentatif du signal égalisé, on détermine un signal d'erreur fonction de la distance entre ledit point représentatif du signal égalise et le point de ladite constellation de référence sélectionné, et on dérive dudit signal d'erreur des signaux de commande pour ajuster les coefficients de l'égaliseur, ce procédé étant caractérisé en ce que:

— la suite des symboles transmis par l'émetteur est une suite de symboles de données dont la configuration est inconnue du recepteur, et
— la constellation de référence est une seconde constellation qui a un nombre de points inférieur à celui de ladite première constellation et qui est obtenue à partir de celle-ci:
en divisant ladite première constellation en quatre ensembles de points $S^l$,, l=1, ..., 4, chacun de ces ensembles comprenant tous les points d'un même quadrant et
en associant à chaque ensemble $S^l$ un point $b^l$ de ladite seconde constellation, le point $b^l$ étant obtenu à partir de la relation:

$$b^l = \frac{\sum\limits_{k\varepsilon S^l} |a^k|^2}{\left(\sum\limits_{k\varepsilon S^l} a^k\right)^*}, \quad l=1, ..., 4$$

où
* indique la quantité complexe conjuguée,
$\varepsilon$ signifie "appartient à", et

les points $a^k$ sont les points de ladite première constellation qui appartiennent à l'ensemble $S^l$.

2. Procédé pour initialiser l'égaliseur adaptatif d'un récepteur de données dans un système de transmission de données utilisant une modulation QAM dans lequel l'émetteur associé à ce recepteur transmet une suite de symboles qui peut être représenté sur un plan complexe par une répartition de points dite première constellation, telle que tous les points sont situés sur des cercles concentriques, chacun d'eux portant au moins quatre points, procédé dans lequel on compare le point représentatif du signal égalisé à une constellation de référence, on sélectionne le point de ladite constellation de référence qui est le plus proche dudit point représentatif du signal égalisé, on détermine un signal d'erreur fonction de la distance entre ledit point représentatif du signal égalisé et le point de ladite constellation de référence sélectionné, et on dérive dudit signal d'erreur des signaux de commande pour ajuster les coefficients de l'égaliseur, ce procédé étant caractérisé en ce que:

— la suite de symboles transmis par l'émetteur est une suite de symboles de données dont la configuration est inconnue du récepteur, et
— la constellation de référence est une seconde constellation qui a un nombre de points inférieur à celui de ladite première constellation, et qui est obtenue à partir de celle-ci:
en divisant ladite première constellation en L ensembles de points $S^l$, l=1, ..., L, ces ensembles étant tels que les zones qui englobent chacun d'eux soient disjointes, et chacun de ces ensembles ne comprenant que des points situés sur une même demi droite passant par l'origine des coordonnées, et
en associant à chaque ensemble $S^l$ un point $b^l$ de ladite seconde constellation, le point $b^l$ étant obtenu à partir de la relation:

$$b^l = \frac{\sum\limits_{k\varepsilon S^l} |a^k|^2}{\left(\sum\limits_{k\varepsilon S^l} a^k\right)^*}, \quad l=1, ..., L$$

où
* indique la quantité complexe conjuguée,
$\varepsilon$ signifie "appartient à", et

les points $a^k$ sont les points de ladite première constellation qui appartiennent à l'ensemble $S^l$.

3. Procédé pour initialiser l'égaliseur adaptatif d'un récepteur de données dans un système de transmission de données utilisant une modulation QAM dans lequel l'émetteur associé à ce récepteur transmet une suite de symboles appartenant à un ensemble de $2^Q$ symboles qui peut être représenté sur un plan complexe par une répartition de points dite première constellation, qu comprend huit points répartis sur deux cercles concentriques, chacun d'eux comprenant quatre points répartis régulièrement, et les points du cercle de plus grand rayon étant décalés de 45° par rapport à ceux de l'autre cercle, procédé dans lequel on compare le point représentatif du signal égalisé à une constellation de reference, on sélectionne le point de ladite constellation de référence qui est le plus proche dudit point représentatif du signal égalisé, on détermine un signal d'erreur fonction de la distance entre ledit point représentatif du signal égalisé et le point de ladite constellation de référence sélectionné, et on dérive dudit signal d'erreur des signaux de commande pour ajuster les coefficients de l'égaliseur, ce procédé étant caractérisé en ce que:

— la suite de symboles transmis par l'émetteur est une suite de symboles de données dont la configuration est inconnue du récepteur, et

— la constellation de référence est une seconde constellation qui a un nombre de points inférieur à celui de ladite première constellation et qui est obtenue à partir de celle-ci:

en divisant ladite première constellation en quatre ensembles de points $S^l$, $l=1, \ldots, 4$, chacun de ces ensembles étant disjoints, et chacun d'eux comprenant un point du cercle de plus petit rayon et le point de l'autre cercle qui lui correspond par décalage de 45°, et

en associant à chaque ensemble $S^l$ un point $b^l$ de ladite seconde constellation, le point $b^l$ étant obtenu à partir de la relation:

$$b^l = \frac{\sum\limits_{k\varepsilon S^l} |a^k|^2}{\left(\sum\limits_{k\varepsilon S^l} a^k\right)^*}, \quad l=1, \ldots, 4$$

où

\* indique la quantité complexe conjuguée, $\varepsilon$ signifie "appartient à", et

les points $a^k$ sont les points de ladite première constellation qui appartiennent à l'ensemble $S^l$.

4. Dispositif pour la mise en oeuvre du procédé selon l'une quelconque des revendications 1, 2 et 3, utilisé dans un récepteur comprenant:

un égaliseur (33),

des moyens (58) pour retrancher de la phase du signal égalise une erreur de phase estimée et fournir un signal égalisé corrigé,

des premiers moyens de détection (4) pour détecter les données en comparant ledit signal égalisé corrigé avec ladite première constellation et tournir un premier signal d'erreur,

des moyens (69, 75, 76) pour dériver ladite erreur en phase estimée à partir dudit premier signal d'erreur,

des moyens (83) pour ajouter ladite erreur de phase estimée à la phase dudit premier signal d'erreur, et

des moyens (56) pour dériver du signal fourni par ces dernier moyens des signaux de commande pour aiuster les coefficients de l'égaliseur, caractérisé en ce qu'il comprend:

des seconds moyens de détection (11) pour comparer le point représentatif dudit signal égalisé corrigé à ladite seconde constellation, sélectionner le point de ladite seconde constellation qui est le plus proche du point représentatif du signal égalisé corrigé, et determiner un second signal d'erreur fonction de la distance entre le point représentatif du signal egalisé corrigé et le point sélectionné de ladite seconde constellation,

des premiers moyens de commutation (88, 89) pour appliquer ledit signal égalisé corrigé auxdits seconds moyens de détection lorsque l'égaliseur a perdu la condition d'égalisation, et

des seconds moyens de commutation (79, 80) pour substituer ledit second signal d'erreur audit premier signal d'erreur lorsque l'égaliseur a perdu la condition d'égalisation.

### Claims

1. In a data receiver for a data transmission system using a QAM technique wherein the associated transmitter transmits a sequence of symbols belonging to a set $2^Q$ symbols that can be represented on a complex plane by a arrangement of points called a first constellation, a method of training the adaptive equalizer of said data receiver that comprises the steps of comparing the point representative of the equalized signal with a reference constellation, selecting that point in said reference constellation which is nearest said point representative of the equalized signal, determining an error signal as a function of the distance between said point representative of the equalized signal and the selected point in said reference constellation, and deriving from said error signal control signals effective to adjust the coefficients of the equalizer, said method being characterized in that:

— the sequence of symbols from said transmitter is a sequence of data symbols whose configuration is unknown to the receiver, and
— the reference constellation is a second constellation that comprises fewer points than said first constellation and is derived therefrom
  — by dividing said first constellation into four sets of points $S^l$, with $l=1, \ldots, 4$, each of which sets comprises all points in the same quadrant, and
  — by associating with each of said sets $S^l$ a point $b^l$ in said second constellation, said point $b^l$ being defined as

$$b^l = \frac{\sum\limits_{k\varepsilon S^l} |a^k|^2}{\left(\sum\limits_{k\varepsilon S^l} a^k\right)^*}, \quad l=1, \ldots, 4$$

where
\* denotes the complex conjugate,
$\varepsilon$ means "belongs to", and

points $a^k$ are those points in said first constellation which belong to set $S^l$.

2. In a data receiver for a data transmission system using a QAM technique wherein the associated transmitter transmits a sequence of symbols that can be represented on a complex plane by an arrangement of points called a first constellation such that all points are located on the circumferences of concentric circles, with at least four points being located on each circumference, a method of training the adaptive equalizer of said data receiver that comprises the steps of comparing the point representative of the equalized signal with a reference constellation, selecting that point in said reference constellation which is nearest said point representative of the equalized signal, determining an error signal as a function of the distance between said point representative of the equalized signal and the selected point in said reference constellation, and deriving from said error signal control signals effective to adjust the coefficients of the equalizer, said method being characterized in that:

— the sequence of symbols from said transmitter is a sequence of data symbols whose configuration is unknown to the receiver, and
— the reference constellation is a second constellation that comprises fewer points than said first constellation and is derived therefrom
  — by dividing said first constellation into L sets of points $S^l$, with $l=1, \ldots, L$, said sets being such that their respective areas do not overlap and that each set solely comprises points located on the same half-line extending from the origin of the coordinates, and
  — by associating with each of said sets $S^l$ a point $b^l$ in said second constellation, said point $b^l$ being defined as

$$b^l = \frac{\displaystyle\sum_{k\varepsilon S^l} |a^k|^2}{\left(\displaystyle\sum_{k\varepsilon S^l} a^k\right)^*}, \quad l=1, \ldots, L$$

where
* denotes the complex conjugate,
$\varepsilon$ means "belongs to", and

points $a^k$ are those points in said first constellation which belong to set $S_l$.

3. In a data receiver for a data transmission system using a QAM technique wherein the associated transmitter transmits a sequence of symbols belonging to a set of $2^Q$ symbols that can be represented on a complex plane by an arrangement of points called a first constellation, which comprises eight points located on the circumferences of two concentric circles, with each circle comprising four equidistant points and the points on the circumference of the outer circle being offset 45° with respect to those on the circumference of the inner circle, a method of training the adaptive equalizer of said data receiver that comprises the steps of comparing the point representative of the equalized signal with a reference constellation, selecting that point in said reference constellation which is nearest said point representative of the equalized signal, determining an error signal as a function of the distance between said point representative of the equalized signal and the selected point in said reference constellation, and deriving from said error signal control signals effective to adjust the coefficients of the equalizer, said method being characterized in that:

— the sequence of symbols from said transmitter is a sequence of data symbols whose configuration is unknown to the receiver, and
— the reference constellation is a second constellation that comprises fewer points than said first constellation and is derived therefrom
  — by dividing said first constellation into four non-overlapping sets of points $S^l$, with $l=1, \ldots, 4$, each of which comprises one of the points on the circumference of the inner circle and the corresponding point offset 45° with respect thereto on the circumference of the outer circle, and
  — by associating with each of said sets $S^l$ a point $b^l$ in said second constellation, said point $b^l$ being defined as

$$b^l = \frac{\displaystyle\sum_{k\varepsilon S^l} |a^k|^2}{\left(\displaystyle\sum_{k\varepsilon S^l} a^k\right)^*}, \quad l=1, \ldots, 4$$

where
* denotes the complex conjugate,
$\varepsilon$ means "belongs to", and

points $a^k$ are those points in said first constellation which belong to set $S^l$.

4. A device for implementing the method according to any one of claims 1, 2 and 3, as used in a receiver comprising:

— an equalizer (33),
— means (58) for subtracting from the phase of the equalized signal an estimated phase error and providing a corrected equalized signal,
— first detection means (4) for detecting the data by comparing said corrected equalized signal with said first constellation and providing a first error signal,
— means (69, 75, 76) for deriving said estimated phase error from said first error signal,
— means (83) for adding said estimated phase error to the phase of said first error signal, and
— means (56) for deriving from the signal supplied by said means (83) control signals effective to adjust the coefficients of the equalizer,

characterized in that it comprises:

— second detection means (11) for comparing the point representative of said corrected equalized signal with said second constellation; for selecting that point in said second constellation which is nearest the point representative of said corrected equalized signal; and for determining a second error signal as a function of the distance between said point representative of said corrected equalized signal and the selected point in said second constellation,

— first switching means (88, 89) for applying said corrected equalized signal to said second detection means whenever the equalization condition has been lost by the equalizer, and

— second switching means (79, 80) for substituting said second error signal for said first error signal whenever the equalization condition has been lost by the equalizer.

## Patentansprüche

1. Verfahren für die Initialisierung eines adaptativen Entzerrers eines Datenempfängers in einem Datenübertragungssystem, das eine Quadratur-Amplituden-Modulation verwendet, wobei der diesem Empfänger zugeordnete Sender eine Symbolfolge überträgt, die einer Menge von $2^Q$ Symbolen angehört und die auf einer komplexen Ebene durch eine Anordnung von Punkten, einer sogenannten ersten Konstellation, dargestellt werden kann, wobei der Punkt, der das entzerrte Signal darstellt, mit einer Bezugskonstellation verglichen wird, und der Punkt in der besagten Bezugskonstellation ausgewählt wird, der dem Punkt, welcher das entzerrte Signal darstellt, am nächsten liegt, und ein Fehlersignal ermittelt wird, in Abhängigkeit vom Abstand zwischen dem besagten, das entzerrte Signal darstellenden Punkt und dem ausgewählten Bezugspunkt in der besagten Bezugskonstellation, und wobei vom besagten Fehlersignal Steuersignale abgeleitet werden, um die Koeffizienten des Entzerrers abzugleichen, wobei das Verfahren dadurch gekennzeichnet ist, dass:

— die Folge der vom Sender übertragenen Signale eine Folge von Datensymbolen ist, deren Anordnung dem Empfänger unbekannt ist, und

— die Bezugskonstellation eine zweite Konstellation ist, die eine kleinere Punktzahl als die besagte erste Konstellation besitzt und die von dieser aus erhalten wird:
durch Teilung der ersten Konstellation in vier Punktmengen $S^l$, $l=1, \ldots, 4$, wobei jede dieser Mengen alle Punkte eines gleichen Viertelkreises enthält, und
durch Zuordnung eines Punktes $b^l$ der besagten zweiten Konstellation an jede Menge $S^l$, wobei der Punkt $b^l$ ausgehend von folgender Beziehung erhalten wird:

$$b^l = \frac{\sum\limits_{k \varepsilon S^l} |a^k|^2}{\left( \sum\limits_{k \varepsilon S^l} a^k \right)^*}, \quad l=1, \ldots, 4$$

— in dieser Formel bedeuten:
* die konjugiert-komplexe Menge
$\varepsilon$ "ist Element von", und

die Punkte $a^k$ sind die Punkte der besagten ersten Konstellation, die Elemente der Menge $S^l$ sind.

2. Verfahren für die Initialisierung eines adaptativen Entzerrers eines Datenempfängers in einem Datenübertragungssystem, das eine Quadratur - Amplituden - Modulation verwendet, wobei der diesem Empfänger zugeordnete Sender eine Symbolfolge überträgt, die in einer komplexen Ebene durch eine Anordnung von Punkten, der sogenannten ersten Konstellation, abgebildet werden kann, so dass sich alle Punkte auf konzentrischen Kreisen befinden, von denen jeder mindestens 4 Punkte trägt, wobei der Punkt, der das entzerrte Signal darstellt, mit einer Bezugskonstellation verglichen wird, und der Punkt in der besagten Bezugskonstellation ausgewählt wird, der dem Punkt, welcher das entzerrte Signal darstellt, am nächsten liegt, und ein Fehlersignal ermittelt wird, in Abhängigkeit von Abstand zwischen dem besagten, das entzerrte Signal darstellenden Punkt und dem ausgewählten Punkt in der besagten Bezugskonstellation, und vom besagten Fehlersignal Steuersignale abgeleitet werden, um die Koeffizienten des Entzerrers nach Ableitung der Steuersignale vom besagten Fehlersignal abzugleichen, wobei das Verfahren dadurch gekennzeichnet ist, dass:

— die Folge der vom Sender übertragenen Symbole eine Folge von Datensymbolen ist, deren Konfiguration dem Empfänger unbekannt ist, und

— die Bezugskonstellation eine zweite Konstellation ist, die eine kleinere Anzahl von Punkten besitzt als die besagte erste Konstellation, und die ausgehend von dieser erhalten wird:
durch Teilung der besagten ersten Konstellation in L Mengen von Punkten $S^l$, $l=1, \ldots, L$, wobei diese Mengen so beschaffen sind, dass sich die Zonen, die jede von ihnen umschliessen, nicht überschneiden, und dass jede dieser Mengen nur Punkte enthält, die auf einer gleichen Halbgeraden liegen, welche durch den Ursprung der Koordinaten führt, und
durch Zuordnung eines Punktes $b^l$ der besagten zweiten Konstellation an jede Menge $S^l$, wobei der Punkt $b^l$ aus folgender Beziehung gewonnen wird:

$$b^l = \frac{\sum\limits_{k \varepsilon S^l} |a^k|^2}{\left( \sum\limits_{k \varepsilon S^l} a^k \right)^*}, \quad l=1, \ldots, L$$

* die konjugiert-komplexe Menge
$\varepsilon$ "ist Element von", und

die Punkte $a^k$ sind die Punkte der besagten ersten Konstellation, die Elemente der Menge $S^l$ sind.

3. Verfahren für die Initialisierung eines adaptativen Entzerrers eines Datenempfängers in einem Datenübertragungssystem, das eine Quadratur-Amplituden-Modulation verwendet, wobei der diesem Empfänger zugeordnete Sender eine Symbolfolge überträgt, die einer Menge von $2^\alpha$ Symbolen angehört, welche in einer komplexen Ebene durch eine Anordnung von Punkten in einer sogenannten ersten Konstellation dargestellt werden kann, und 8 Punkte enthält, die auf zwei konzentrischen Kreisen angeordnet sind, von denen jeder vier in gleichen Abständen angeordnete Punkte enthält, während die Punkte des Kreises mit dem grösseren Halbmesser gegenüber denen des anderen Kreises um 45° verschoben sind, wobei der das entzerrte Signal darstellende Punkt mit einer Bezugskonstellation verglichen wird und der Punkt der Bezugskonstellation ausgewählt wird, der dem das entzerrte Signal darstellenden Punkt am nächsten liegt, und ein Fehlersignal ermittelt wird, in Abhängigkeit vom Abstand zwischen dem besagten, das entzerrte Signal darstellenden Punkt und dem ausgewählten Punkt in der besagten Bezugskonstellation, und vom besagten Fehlersignal Steuersignale abgeleitet werden, um die Koeffizienten des Entzerrers nach Ableitung der Steuersignale vom besagten Fehlersignal abzugleichen, wobei das Verfahren dadurch gekennzeichnet ist, dass:

— die vom Sender übertragene Symbolfolge eine Folge von Datensymbolen ist, deren Anordnung dem Empfänger unbekannt ist, und
— die Bezugskonstellation eine zweite Konstellation ist, die eine kleinere Punktzahl besitzt als die besagte erste Konstellation und die von ihr aus erhalten wird:
durch Teilung der besagten ersten Konstellation in vier Punktmengen $S^l$, $l=1,\ldots,4$, wobei sich diese Mengen nicht überschneiden und jede von ihnen einen Punkt des kleineren Kreises und den ihm entsprechenden, um 45° verschobenen Punkt des grösseren Kreises enthält und
durch Zuordnung eines Punktes $b^l$ der besagten zweiten Konstellation an jede Menge $S^l$, wobei sich der Punkt $b^l$ aus folgender Beziehung ergibt:

$$b^l = \frac{\sum\limits_{k \varepsilon S^l} |a^k|^2}{\left(\sum\limits_{k \varepsilon S^l} a^k\right)^*}$$

In dieser Formel bedeuten:
* die konjugiert-komplexe Menge
$\varepsilon$ "ist Element von", und

die Punkte $a^k$ sind die Punkte der besagten ersten Konstellation, die Elemente der Menge $S^l$ sind.

4. Vorrichtung für den Einsatz des Verfahren nach einem der Ansprücke 1, 2 und 3, verwendet in einem Empfänger, der enthält:
einen Entzerrer (33),
Mittel (58), um von der Phase des entzerten Signals den geschätzten Phasenfehler abzuziehen und ein berichtigtes entzrrtes Signal abzugeben,
erste Detektionsmittel (4), um die Daten durch Vergleich des berichtigten entzerrten Signals mit der besagten ersten Konstellation zu detektieren und ein erstes Fehlersignal abzugeben,
Mittel (69, 75, 76) um den besagten nach dem ersten Fehlersignal geschätzten Phasenfehler abzuleiten,
Mittel (83), um den besagten geschätzten Phasenfehler zur Phase des besagten ersten Fehlersignals hinzuzuaddieren, und
Mittel (56) um von dem mit diesem letzteren Mittel (83) gelieferten Signal Steuersignale abzuleiten, um die Koeffizienten des Entzerrers abzustimmen,
dadurch gekennzeichnet, dass es umfasst:
zweite Detektionsmittel (11), um den repräsentativen Punkt des besagten entzerrten Signals mit der besagten zweiten Konstellation zu vergleichen, und ein zweites Fehlersignal zu erzeugen, das abhängig vom Abstand zwischen dem repräentativen Punkt des berichtigten entzerrten Signals und dem ausgewählten Punkt der besagten zweiten Konstellation ist,
erste Schaltmittel (88, 89), um das besagte entzerrte Signal an die besagten zweiten Detektionsmittel anzulegen, wenn der Entzerrer den Entzerrungszustand verloren hat, und
zweite Schaltmittel (79, 80), um das besagte zweite Fehlersignal anstelle des ersten Fehlersignals einzusetzen, wenn der Entzerrer den Entzerrungszustand verloren hat.

FIG.1

FIG.2

FIG. 3

FIG. 4

FIG. 5

$S^2$ $S^1$

•a6 •a5 •a3 •a2

3

a7 a8 a4 a1
• • • •

1

1 3

•a9 •a12 •a16 •a15

a10 a11 a13 a14
• • • •

$S^3$ $S^4$

FIG. 6

•b2 2,5 •b1

2,5

•b3 •b4

FIG. 9

| FIG. 9 A | FIG. 9 B | FIG. 9 C | FIG. 9 D |

FIG. 7

FIG. 8

FIG. 9 A

FIG. 9 B

FIG. 9 C

FIG. 9 D

FIG. 10